# EUROPEAN PATENT SPECIFICATION

(11) **EP 0 769 234 B1**
(45) Date of publication and mention of the grant of the patent: **04.11.1998**
(21) Application number: 95923146.5
(22) Date of filing: 26.06.1995
(51) Int. Cl.: H04N 7/18

(54) **AUDIO/VIDEO SURVEILLANCE AND RECORDING SYSTEM**
AUDIO-/VIDEOÜBERWACHUNGS- UND AUFNAHMESYSTEM
SYSTEME DE SURVEILLANCE ET D'ENREGISTREMENT AUDIO/VIDEO

(30) Priority: 04.07.1994 CA 2127312
(43) Date of publication of application: 23.04.1997
(73) Proprietor: SILENT WITNESS ENTERPRISES LTD., Surrey British Columbia V3S 4G5 (CA)
(72) Inventor: BAKSHI, Rajeev, K., Delta, British Columbia V4C 4C9 (CA)
(74) Representative: Quinterno, Giuseppe
(86) International application number: CA9500381
(87) International publication number: WO9601538

(56) References cited:
- DE-A- 2 422 965
- DE-U- 9 105 523
- US-A- 4 080 629
- US-A- 5 319 394

## Description

### Technical Field

The invention relates to the field of audio/video surveillance and recording systems. More particularly it relates to audio/video monitoring and recording systems for use in school buses and similar environments.

### Background Art

Vehicle-mounted video or movie cameras are used for police vehicles to record events occurring outside the vehicle. See for example U.S. patent no. 5,111,289 Lucas et al. issued May 5, 1992; U.S. patent no. 5,102,335 Cohodar issued April 30, 1991; U.S. patent no. 4,789,904 Peterson issued December 6, 1988; and German patent application DE 40 16570 A1 Aichele et al. published September 19, 1991. Monitoring cameras stored in protective housings are used for surveillance in stores, factories and the like. See for example U.S. patent no. 3,993,866 Pearl issued November 23, 1976; and U.S. patent no. 4,160,999 Claggett issued July 10, 1979. Other cameras are mounted in a vehicle for surveillance of the activities of occupants of the vehicle, such as U.S. patent no. 1,733,783 Medina issued October 29, 1929; U.S. patent no. 3,752,047 Gordon et al. issued August 14, 1973; and U.S. patent no. 5,282,182 Kreuzer issued January 25, 1994.

Document DE-A-2 422 965 discloses a secure housing for a video monitoring camera. The housing is mounted with a cardanic telescopic member, which makes any camera angle possible.

Video monitoring systems are particularly useful for reducing vandalism and misbehaviour in certain applications such as school buses. In such applications, it is sufficient to have a proportion of "dummy" surveillance camera installations, which do not contain actual cameras, to lower the cost of the system without affecting significantly the effectiveness of the system in reducing misbehaviour by student passengers. In the past, tinted or mirrored glass has been used to conceal whether the box is a "dummy" or a "live" box. However the use of tinted or mirrored glass reduces the light which reaches the camera. Also, in the past it has been difficult to permit adjustment of the orientation of the monitor housing while still ensuring that the housing is not readily tampered with.

There is therefore a need for a video monitoring system which conceals dummy installations without reducing the effectiveness of live installations. There is a further need for monitor housings which can be installed and adjusted readily while not permitting tampering.

### Disclosure of Invention

The invention as defined by claim 1 provides a secure housing for a video monitoring camera comprising i) a first bracket member for securing to a surface about a first axis of rotation; ii) a second bracket member for securing to the first bracket member about a second axis of rotation perpendicular to the first axis of rotation; iii) a connector housing adapted for securing to the second bracket member about a third axis of rotation perpendicular to the first and second axes of rotation, and comprising cable means and connector means for connecting to a camera assembly within a camera housing; and iv) a camera housing having a front and a rear, adapted for securing the rear of the camera housing to the connector housing by means of a small number of tamper-resistant fasteners accessible from the front of the camera housing, and being suitable for housing a camera assembly for connecting to the connector means, wherein access to the interior of the camera housing is provided by fasteners accessible only from the rear of the camera housing.

### Brief Description of Drawings

In drawings which illustrate a preferred embodiment of the invention:
Fig. 1 is a perspective view of the camera housing of the invention;
Fig. 2 is a cross-sectional view taken along lines 2-2 of Fig. 1, with the mounting bracket separated for clarity;
Fig. 3 is a top view of the mounting bracket shown in Fig. 2;
Fig. 3A is a perspective view of the mounting bracket shown in Fig. 2;
Fig. 4 is an exploded view of the housing shown in Fig. 2 in cross-section;
Fig. 5 is a front view of the camera housing;
Fig. 6 is a rear view of the camera housing with the video socket cover plate removed;
Fig. 7 is a front view of the mount box;
Fig. 8 is a rear view of the mount box;
Fig. 9 is a front view of the dummy lens;
Fig. 10 is a cross-sectional view of the dummy lens taken along lines 10-10 of Fig. 9;
Fig. 11 is an end view of the VCR box assembly;
Fig. 12 a cross-sectional view of the VCR box assembly taken along lines 12-12 of Fig. 11;
Fig. 13 is a top plan view of the VCR box assembly of Fig. 11 with the top panel removed; and
Fig. 14 is a perspective view of the microphone element of the invention.

### Best Mode(s) For Carrying Out the Invention

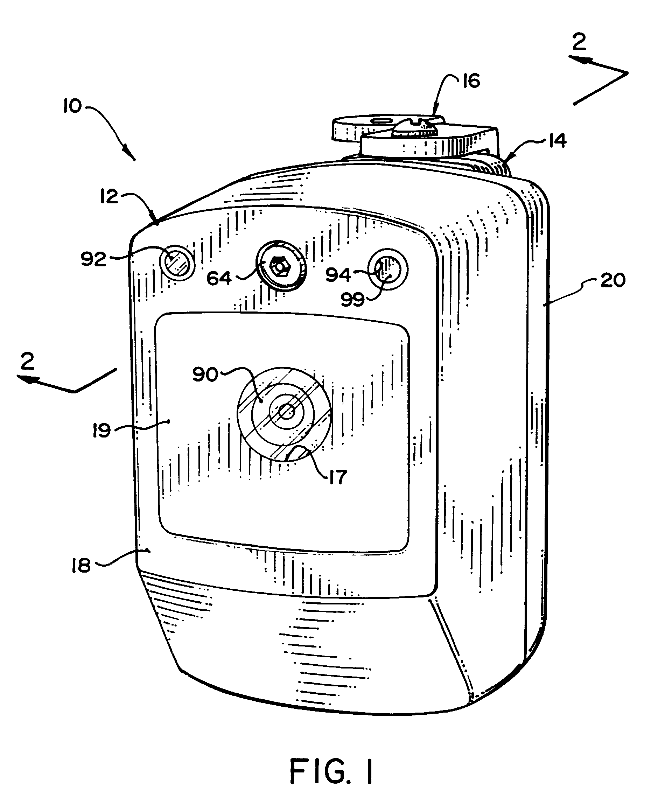

Prior school bus audio/video monitoring and surveillance systems of Silent Witness Enterprises Ltd. provide a visible audio/video surveillance and recording system in school buses and the like to reduce misbehaviour and vandalism in such environments. These prior systems have used camcorders mounted in a secure housing. It has been found that the effectiveness of such systems is not significantly reduced, while the cost is significantly reduced, if dummy installations, without a camera, are used to replace a number of the installations with cameras. In the prior art noted above, the presence or absence of a camera has been camouflaged by the use of a half-silvered cover on the lens aperture. The present invention is also designed for use on school buses and in school classrooms, and to allow for the use of dummy units. However in the present system a separate video-cassette recorder ("VCR") is used in conjunction with a separate camera and microphone unit. The camera and microphone housing 10, shown in Fig. 1 through 4, is mounted visibly in the area to be monitored, while the VCR is secured in a VCR box in a remote location.

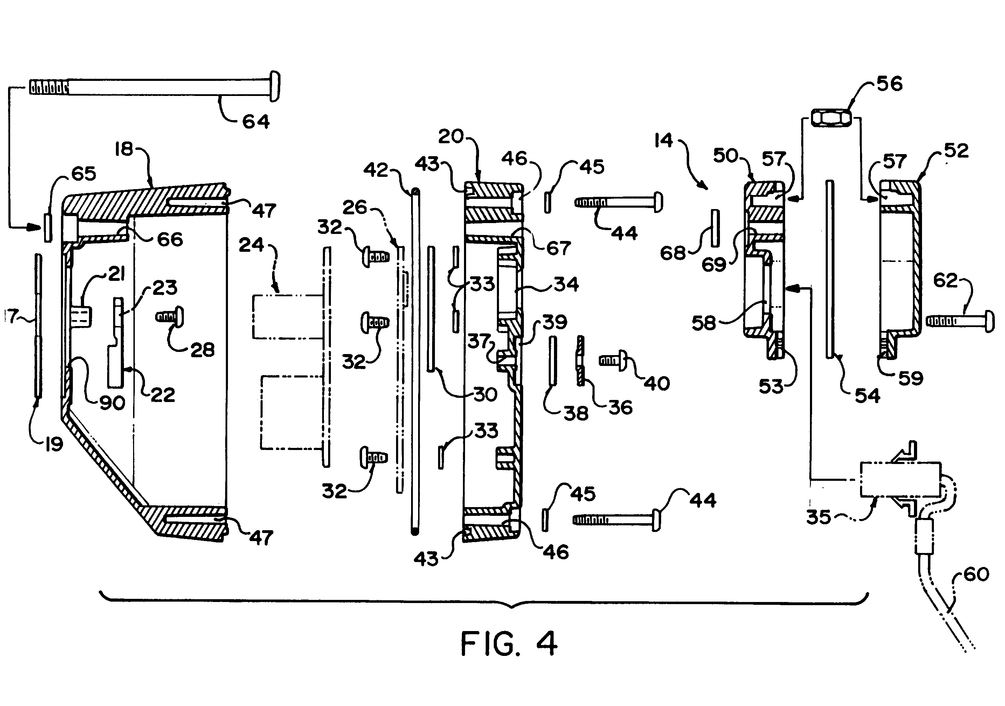

The camera housing 10 comprises a camera housing body 12, a mounting box 14, and a mounting bracket 16, all of which will typically be manufactured of die-cast zinc. The construction of the camera housing 10, which will be about 3" x 3" x 5" preferably, is shown in Figure 4. It comprises a camera housing body front section 18 and a camera housing body back section 20. Mounted within camera housing 10 is either a dummy lens 22 or a camera assembly board 24, and motherboard 26. Dummy lens 22 is secured through slot 23 to a post 21 by screw 28. Dummy lens 22 may be swung into and out of algnment with transparent portion 17 of cover plate 19. Cover plate 19 is secured by adhesive to housing body 12 into a recess over aperture 90. Gasket 30 is secured to the back of the motherboard 26 by adhesive and the motherboard assembly is then secured to camera housing back section 20 by screws 32 and nylon washers 33. Hole 34 is provided in camera housing back section 20 for the connector assembly 35, and a video cover plate 36 is provided. A cover plate seal 38 is secured in recess 39 by adhesive and cover plate 36 is screwed to back section 20 by screw 40 through hole 37. A seal gasket 42, preferably of die-cut 60 durometer 3/32" black neoprene, which sits in groove 43, is provided between camera housing front and back sections 18, 20. Camera housing front and back sections 18, 20 are joined by two screws 44 which extend through nylon washers 45, through apertures 46 and into holes 47 in the front section 18.

Mounting box 14 comprises front section 50 and back section 52. A gasket 54 is secured to back section 52 by adhesive. A plurality of nuts 56 are held from rotation in recesses 57. Hole 58 is provided in mounting box front section 50 for the connector assembly 35 and aperture 59 is provided for attached cable 60 and has ridges 53 to grip the cable 60. Front section 50 and back section 52 are joined by screws 62 through holes 63. Camera housing body 12 is secured to mounting box 14 by a single tamper-proof bolt 64 extending through rubber weather seal washer 65, apertures 66, 67 and seal washer 68 into hole 69. Bolt 64 has a non-standard head, such as a spanner head, which requires a special tool to unfasten.

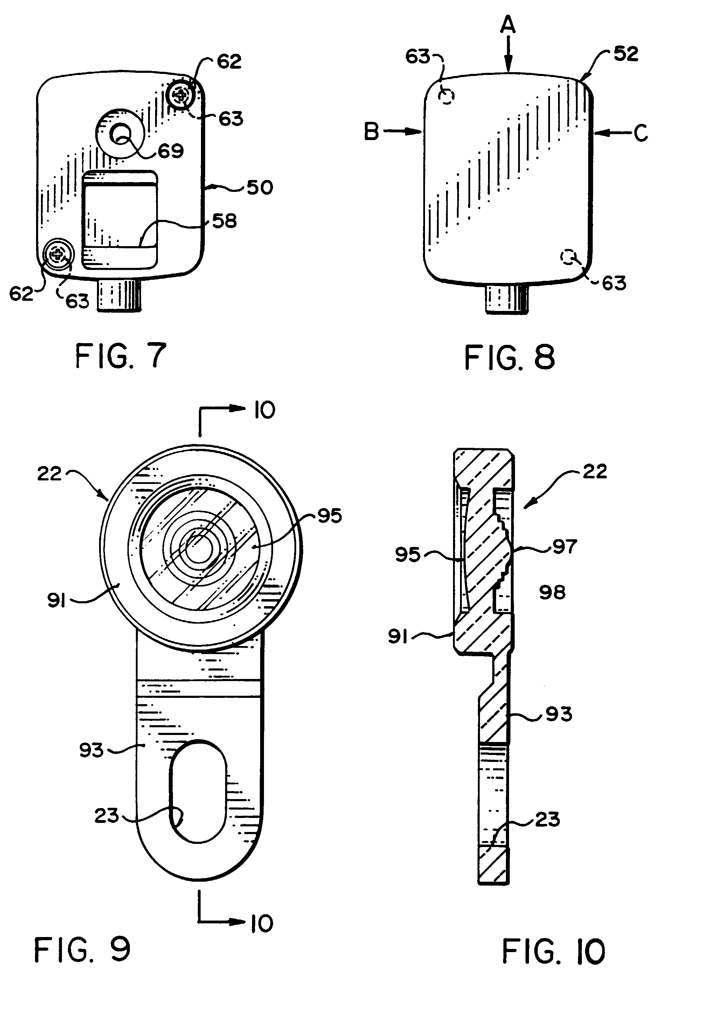

Mounting bracket 16 comprises a wall mount bracket 70 and a swivel bracket 72. Swivel bracket 72 has a horizontal flange 74 provided with central hole 75 through which a hex head capscrew 76, or a tamper-proof bolt, mates with lockwasher 77 and nut 56. Similar attachment holes are provided at locations A, B and C shown in Figure 8 to expand the flexibility of attachment. Swivel bracket 72 has a radiused vertical wall 78 to permit the mounting box 14 to be swivelled, and a plate 79. Plate 79 has a radiused edge 81 so it can be pivoted in relation to bracket 70. Wall mount bracket 70 has a flat plate 73 provided with a central hole 71 through which plate 70 is bolted to a wall bracket 171 by bolt 172 and about which bracket 70 may be pivoted. Bracket 70 has a vertical flange 87 which is perpendicular to plate 73 and which has a hole 80 through which a capscrew 85 is provided to secure flange 87 to plate 79 by threaded hole 83 in plate 79, and about which plate 79 may pivot relative to flange 87 when capscrew 85 is loosened.

The foregoing construction therefore allows the camera housing to be mounted in any desired orientation, by rotation about bolts or capscrews 76, 85 and about hole 71. It has the further advantage that the interior of the housing can be readily accessed only by unfastening a single tamper-proof screw 64. This is advantageous both for discouraging unauthorized access and facilitating quick authorized access.

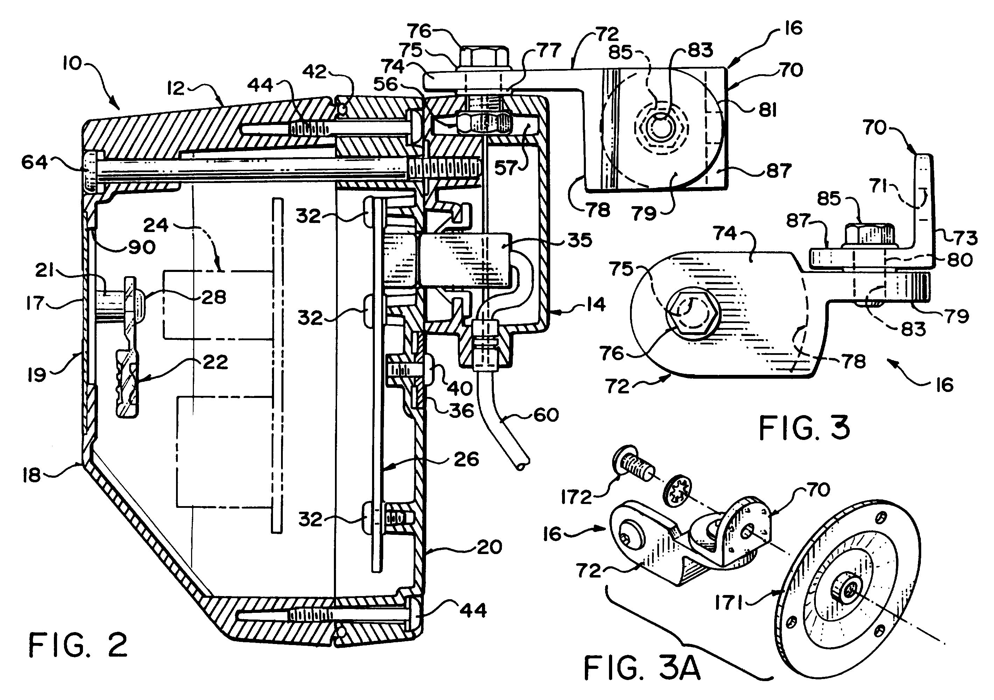

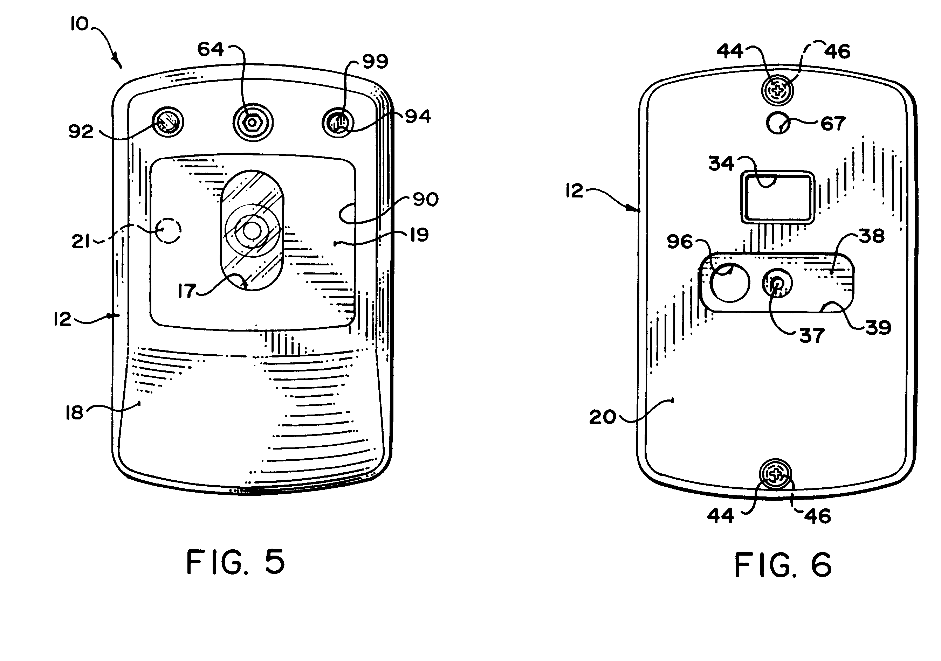

With reference to Fig. 1 and 5, the front of housing 10 has a lens aperture 90 (shown as circular in Fig. 1 and as obround in Fig. 2, 3, 4 and 5) covered with a transparent plastic portion 17 of cover plate 19, an indicator LED 92 which is illuminated, preferably intermittently, whether the unit is a live or dummy unit to indicate to the observer that the camera is active, and a microphone 99 within microphone aperture 94 for the live units. There are two types of dummy units, one type has a motherboard but no microphone or camera. The second type has an internal battery. A standard 'D' cell battery (not shown) is provided in the second type of dummy units to power the LED 92 and a flasher. The second type of dummy unit can be operated therefore without power from cable 60 and therefore without complete system wiring. So that the LED will not be illuminated in a dummy unit of the second type until it is installed, the battery circuit is only completed when the housing 10 is installed on mounting box 14. A jumper is provided within connector 35.

Fig. 6 illustrates the back of the camera housing 10 with the video socket cover plate 36 removed, exposing the video socket 96. Video socket 96 is connected to the motherboard 26 to permit a 3-inch LCD monitor, or other video monitor, to be directly connected to the video output. This allows the installer to view the camera output from the monitor while the housing is being installed to facilitate the proper orientation of the camera housing.

The structure of dummy lens 22 is shown in Fig. 9 and 10. The dummy lens 22 is constructed of a clear acrylic and comprises a disc-like lens section 91 and an elongated support section 93 in which slot 23 is formed. The front face 95 of lens section 91 is radiused with an optical quality surface finish. The rear face 98 of lens section 91 is stepped to provide an impression of depth. The central radiused section 97 of face 98 also has an optical quality surface finish. A small blue circle may be stuck to central radiused section 97 to add to the impression of depth.

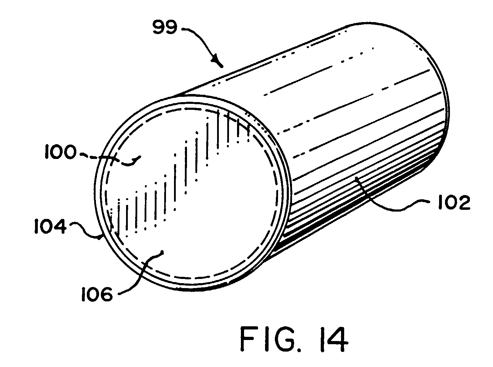

The circuitry for the camera assembly board 24 is standard, preferably a CCD camera with 380 line resolution and low-light sensitivity with auto iris control for variable light conditions with compensation factoring. For the microphone 99, a microphone element is weatherproofed using a unique method. A microphone element is used which is essentially cylindrical with a sound sensitive surface 100 (Fig. 14) at one end of the cylinder 102. An "O"-ring 104 having an outside diameter approximately the same as the outside diameter of the microphone element is bonded to surface 100, using a cyanoacrylate adhesive at a minimum of three points on the "O"-ring. The microphone element 99 is then immersed, "O"-ring first, into a liquid plastic coating material, such as is sold under the trade-mark PLASTI DIP, ensuring that the surface normal of the microphone element sound sensitive surface is perpendicular to the surface of the PLASTI DIP. Once the microphone element is removed from the PLASTI DIP, a straight edge is drawn across the surface of the "O"-ring to remove any excess PLASTI DIP. Once the material has dried, there remains an impermeable membrane 106 much like a drum head above the sound sensitive surface. This membrane can also be made to surround the entire device, including electrical leads or components if so desired, by controlling the depth of immersion.

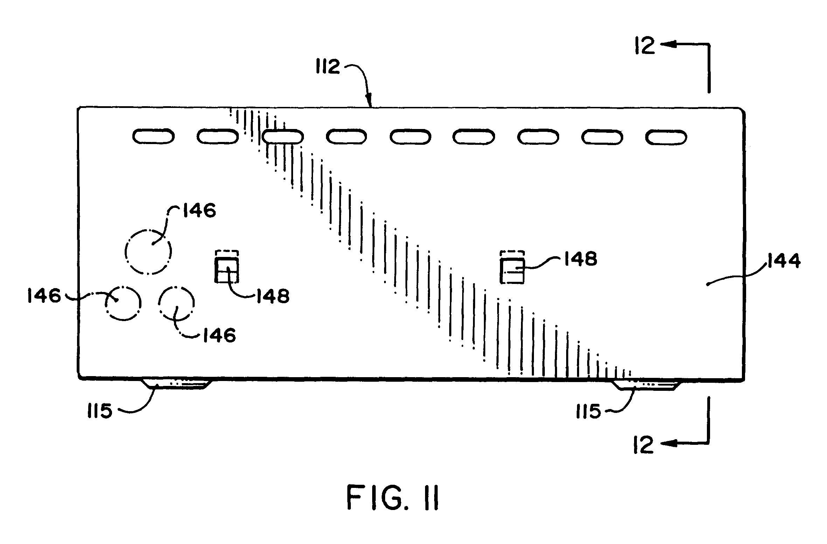

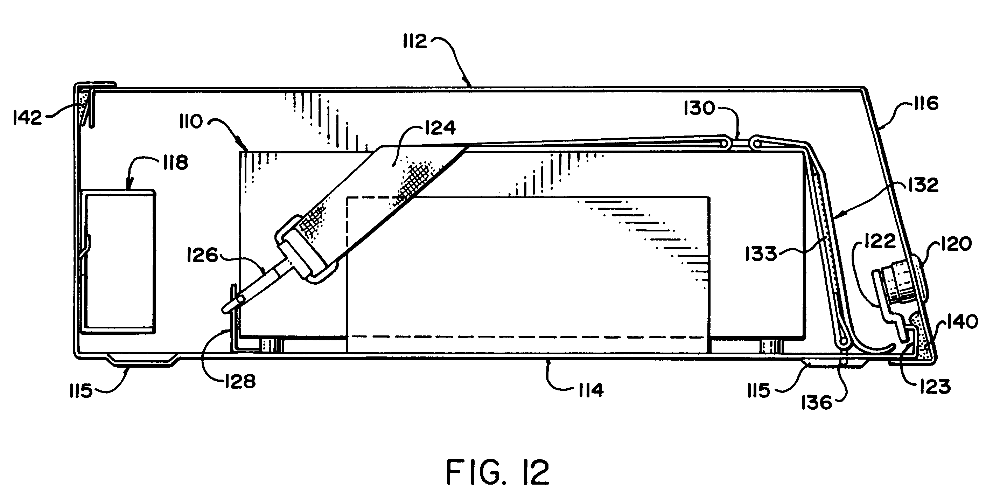

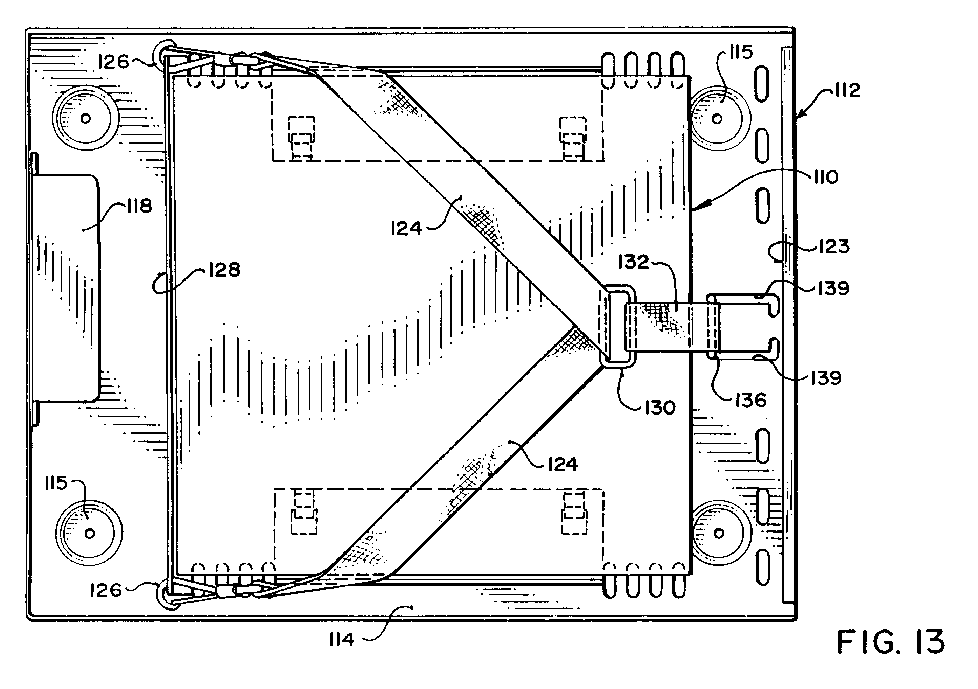

Fig. 11 through 13 illustrate the VCR 110 which records the signal from cable 60 and VCR box assembly 112 which stores it securely. VCR box 112 is constructed from a die-cast zinc and comprises a base 114 provided with feet 115 and a front and top panel 116 which slides out of the base 114 to expose the VCR 110 and switch box 118. A lock 120 locks the front panel in place with an arm 122 to a flange 123 fixed to base 114. A strap 124 of polyester webbing is secured by spring snaps 126 at either end to bar 128 attached to base 114 and runs over VCR 110, through loop 130. A strip of hook and loop fastener 133 on strap 132 is used to tighten loop 130 down to loop 136 which slides in grooves 139, thereby tightly securing VCR 110 in box 112. Foam pads are provided at 140 and foam tape at 142 to dampen vibration. End panel 144 shows the power and cable access 146 and mounting hooks 148 for the switch box.

In operation, the mounting bracket and mounting box will be installed in each school bus or other desired location in the proper orientation for camera operation. However only a limited number of camera housings 10 with actual camera assemblies 24 will be installed, the remaining housings 10 only containing dummy lenses 22. The mounting bracket 16 and mounting box 14, and cabling 60 to VCR box 112 are permanently installed. The dummy camera housings can be rapidly switched with the camera-equipped housings by simply removing bolt 64 and switching housings 10, without removing mounting bracket 16 or mounting box 14. The use of dummy lenses permits the use of a transparent cover lens rather than the half-silvered or tinted glass of the prior art, which reduced the brightness of the recorded image.

While the system has been described using a VCR, television monitors may be substituted for the VCR.

As will be apparent to those skilled in the art in the light of the foregoing disclosure, many alterations and modifications are possible in the practice of this invention without departing from the scope thereof defined by the following claims.

## Claims

1. A secure housing for a video monitoring camera comprising:
i) a first bracket member (70) for securing to a surface about a first axis of rotation;
ii) a second bracket member (72) for securing to said first bracket member about a second axis of rotation perpendicular to said first axis of rotation;
iii) a connector housing (14) adapted for securing to said second bracket member (72) about a third axis of rotation perpendicular to said first and second axes of rotation, and comprising cable means (60) and connector means (35) for connecting to a camera assembly (24) within a camera housing; and
iv) a camera housing (12) having a front and a rear, adapted for securing said rear of said camera housing to said connector housing (14) by means of a small number of tamper-resistant fasteners (64) accessible from said front of said camera housing, and being suitable for housing a camera assembly (24) for connecting to said connector means, wherein access to the interior of said camera housing is provided by second fasteners (44) accessible only from said rear of said camera housing, access to all of said second fasteners being available only when said camera housing is removed from said connector housing.

2. An audio/video surveillance recording system comprising:
i) a plurality of secure housings as claimed in claim 1 each having a transparent lens aperture (90,27), at least one of said housings having a video camera adapted for producing a video signal mounted in the interior of said housing behind said lens aperture, and the remainder of said housings having a simulated lens (22) in the interior of said housing behind said lens aperture;
ii) a video tape recorder (110) and/or monitoring means connected to said one of said housings having a video camera for recording said video signal from said video camera.

3. The audio/video surveillance recording system of claim 2 wherein a plurality of said secure housings each comprise illuminated indicator means (92) on the exterior of said housings, and said remainder comprise housings which comprise battery means and conductive means for supplying electricity from said battery to said indicator means.

4. The audio/video surveillance recording system of claim 3 wherein said conductive means are arranged so an electricity-supplying circuit including said battery and said indicator means is formed when said housing is secured to said mounting assembly, and is broken when said housing is disconnected from said mounting assembly.

## Patentansprüche

1. Sicherheitsgehäuse für eine Videoüberwachungskamera mit:
i) einem ersten Trägerteil (70) zum Befestigen an einer Oberfläche und Festlegen bezüglich einer ersten Rotationsachse;
ii) einem zweiten Trägerteil (72) zum Befestigen an dem ersten Trägerteil und Festlegen bezüglich einer zweiten Rotationsachse, die senkrecht zur ersten Rotationsachse verläuft;
iii) einem Anschlußgehäuse (14), das zum Befestigen an dem zweiten Trägerteil (72) und Festlegen bezüglich einer dritten senkrecht zur ersten und zweiten Rotationsachse verlaufenden Rotationsachse angepaßt ist und Kabel (60) und Anschlüsse (35) zum Anschließen an eine Kamera (24) in einem Kameragehäuse aufweist; und
iv) einem Kameragehäuse (12) mit einer Vorder- und einer Rückseite, das zum Befestigen der Rückseite des Kameragehäuses an dem Anschlußgehäuse (14) mittels einer geringen Anzahl zugriffsgeschützter Befestigungsmittel (64), die von der Vorderseite des Kameragehäuses zugänglich sind, angepaßt und zur Aufnahme eines Kameragehäuses (24) zum Anschluß an die Anschlüsse geeignet ist, wobei der Zugang zu dem Inneren des Kameragehäuses durch zweite Befestigungsmittel (44) geboten ist, die nur von der Rückseite des Kameragehäuses zugänglich sind und der Zugriff auf all die zweiten Befestigungsmittel nur gegeben ist, wenn das Kameragehäuse von dem Anschlußgehäuse entfernt ist.

2. Audio/Videoüberwachungs- und Aufnahmesystem mit:
i) einer Vielzahl von Sicherheitsgehäusen nach Anspruch 1 mit einer transparenten Objektivöffnung (90, 17), von denen zumindest eines der Gehäuse eine Videokamera beherbergt, die zum Erzeugen eines Videosignals angepaßt ist und im Inneren des Gehäuses hinter der Objektivöffnung angeordnet ist, und wobei die übrigen Gehäuse eine simuliertes Objektiv (22) im Inneren des Gehäuses hinter der Objektivöffnung aufweisen;
ii) einem Videorecorder (110) und/oder Aufnahmemitteln die an eines der Gehäuse angeschlossen sind, welches eine Videokamera zum Aufnehmen des Videosignals von der Videokamera aufweist.

3. Audio/Videoüberwachungs- und Aufnahmesystem nach Anspruch 2, bei dem eine Vielzahl von Sicherheitsgehäusen jeweils beleuchtete Anzeigemittel (92) auf der Außenseite der Gehäuse aufweist und bei der die Restlichen Gehäuse aufweisen, welche Batterien und Leiter zum Versorgen der Anzeigemittel mit Strom aus den Batterien aufweisen.

4. Audio/Videoüberwachungs- und Aufnahmesystem nach Anspruch 3, bei dem die Leiter so angeordnet sind, daß ein Stromversorgungskreis, der die Batterie und die Anzeigemittel einschließt, geschlossen wird, wenn das Gehäuse an dem Montageaufbau befestigt ist und unterbrochen ist, wenn das Gehäuse von dem Montageaufbau gelöst ist.

## Revendications

1. Boîtier fixe pour caméra vidéo de surveillance comprenant :
i) un premier élément formant support (70) pour être fixé à une surface autour d'un premier axe de rotation ;
ii) un second élément formant support (72) pour fixer ledit premier élément formant support autour d'un deuxième axe de rotation perpendiculaire audit premier axe de rotation ;
iii) un boîtier de connecteur (14) adapté pour être fixé audit deuxième élément formant support (72) autour d'un troisième axe de rotation perpendiculaire auxdits premier et deuxième axes de rotation, et comprenant des moyens de câbles (60) et des moyens de connecteur (35) pour être relié à un ensemble de caméra (24) à l'intérieur d'un boîtier de caméra ; et
iv) un boîtier de caméra (12) ayant une face avant et une face arrière, adapté pour fixer ladite face arrière dudit boîtier de caméra audit boîtier de connecteur (14) au moyen d'un petit nombre d'attaches (64) résistantes aux manipulations et accessibles depuis ladite face avant dudit boîtier de caméra, et étant adapté pour loger un ensemble de caméra (24) destiné à être connecté auxdits moyens de connecteurs, dans lequel on accède à l'intérieur dudit boîtier de caméra par des secondes attaches (44) accessibles seulement depuis ladite face arrière dudit boîtier de caméra, l'accès à l'ensemble desdites secondes attaches étant disponible seulement lorsque ledit boîtier de caméra est retiré dudit boîtier de connecteur.

2. Système de surveillance et d'enregistrement audio/vidéo comprenant :
i) une pluralité de boîtiers fixes selon la revendication 1, ayant chacun une ouverture (90, 97) formant objectif transparent, au moins un desdits boîtiers ayant une caméra vidéo adaptée pour délivrer un signal vidéo et montée à l'intérieur dudit boîtier derrière l'ouverture d'objectif, et le reste desdits boîtiers ayant un objectif factice (22) à l'intérieur dudit boîtier derrière ladite ouverture d'objectif ;
ii) un enregistreur à cassette vidéo (110) et/ou des moyens de surveillance connectés audit premier desdits boîtiers ayant une caméra vidéo pour enregistrer ledit signal vidéo à partir de ladite caméra vidéo.

3. Système de surveillance et d'enregistrement audio/vidéo selon la revendication 2, dans lequel plusieurs desdits boîtiers fixes comprennent chacun des moyens d'indication lumineuse (92) sur l'extérieur desdits boîtiers, et ledit reste comprend des boîtiers qui comprennent des moyens de batterie et des moyens conducteurs pour alimenter en électricité lesdits moyens d'indication à partir de ladite batterie.

4. Système de surveillance et d'enregistrement audio/vidéo selon la revendication 3, dans lequel lesdits moyens conducteurs sont agencés de telle sorte qu'un circuit d'alimentation électrique comprenant ladite batterie et lesdits moyens d'indication soit formé lorsque ledit boîtier est fixé audit ensemble de montage, et soit ouvert lorsque ledit boîtier est déconnecté dudit ensemble de montage.
